# EUROPEAN PATENT APPLICATION

(11) **EP 4 564 050 A1**
(43) Date of publication of application: **04.06.2025**
(21) Application number: 23213757.0
(22) Date of filing: 01.12.2023
(51) Int. Cl.: G01S 7/48, G01S 7/481, G01S 17/42, G01S 17/89

(54) **SURVEYING SYSTEM WITH BI-DIMENSIONAL SCANNING PROFILE**

(71) Applicant: Trimble Inc., Westminster, CO 80021 (US)
(72) Inventor: GENIN, Eric, Joinville le Pont (FR); DAY, Richard, Joinville le Pont (FR)
(74) Representative: AWA Sweden AB

(57) **Abstract**

A mobile surveying system is provided. The system comprises a first deflection unit, a second deflection unit, and a laser source configured to generate a laser beam. The first deflection unit is arranged to deflect the laser beam onto the second deflection unit. The first deflection unit is rotatable to vary a position at which the laser beam impinges the second deflection unit. The second deflection unit is rotatable to scan the laser beam about the mobile surveying system. The first deflection unit and the second deflection unit together provide a bi-dimensional scanning profile of the laser beam about the mobile surveying system. The mobile surveying system further comprises a detector and a processor. The detector is configured to detect light having traveled a beam path extending from the laser source, via the first deflection unit and the second deflection unit, to an object of an environment surrounding the mobile surveying system and then back from the object, via the second deflection unit and the first deflection unit, to the detector. The processor is configured to collect, along the bidimensional scanning profile, a plurality of scanned points of the environment surrounding the mobile surveying system based on light detected by the detector and reconstruct a trajectory of the mobile surveying system in the environment based on the plurality of scanned points.

## Description

### Technical field

The present application generally relates to the field of surveying equipment. More specifically, it relates to a mobile surveying system with a bi-dimensional scanning profile.

### Background

Mobile mapping systems include technologies used to capture and create detailed geospatial data and maps while in motion. These systems are typically mounted on vehicles, such as cars, trucks, or drones, and are equipped with various sensors and data collection devices. Mobile mapping systems may for example include GPS or other Global Navigation Satellite Systems (GNSS), range detectors such as lidar or radar, imaging detectors such as visual or thermal cameras, orientation sensors, e.g., Inertial Measurement Units (IMU), and other movement/distance detectors, wheel encoders etc.

A first type of current mobile mapping scanner is based on a line of receivers and laser diode sources assembled together in a single-direction scanning device. This type of device may for example be used in autonomous cars for close range mapping and obstacles detection.

A second type of mobile mapping scanner uses line scanning systems in, e.g., a butterfly configuration, in which the sensors are arranged in the shape of a butterfly, with two sensor pods pointing in opposite directions. Line scanning systems include a laser source and a detector, such as a camera or laser detector, to capture data in a plane intersecting a scene to be scanned. Such systems may be used, e.g., for land mapping applications.

These two types of mobile mapping systems have different advantages, but each suffers from some drawbacks, as further explained below.

Lidars in autonomous cars, as in the first type of mobile mapping scanner, often provide good range information. However, the spatial resolution and spot size, as well as range accuracy, are relatively poor.

For mobile mapping, line scanning systems as in the second type are used in conjunction with additional sensors, such as IMU and GNSS, to determine a vehicle trajectory and build a map of the environment. However, GNSS signals are not always available. For example, when the vehicle drives under a canopy, in a tunnel, or in an urban canyon, satellites may be out of view. In order to avoid trajectory drift when GNSS data is not available, a high-end IMU would be necessary.

### Summary

It is therefore an object of the present invention to overcome at least some of the above-mentioned drawbacks, and to provide an improved device and method for determining accurately a vehicle trajectory.

Specifically, the present disclosure aims to provide a method and a device for reconstructing a vehicle trajectory based on an improved bi-dimensional laser scan profile providing improved data redundancy for the trajectory reconstruction.

This and other objects are achieved by means of a mobile surveying system and a method for reconstructing a trajectory of a mobile surveying system as defined in the appended independent claims. Other embodiments are defined by the dependent claims.

According to a first aspect of the present disclosure, a mobile surveying system is provided. The mobile surveying system comprises a first deflection unit, a second deflection unit, and a laser source configured to generate a laser beam. The first deflection unit is arranged to deflect the laser beam onto the second deflection unit. The first deflection unit is rotatable to vary a position at which the laser beam impinges the second deflection unit. The second deflection unit is rotatable to scan the laser beam about the mobile surveying system. The first deflection unit and the second deflection unit together provide a bi-dimensional scanning profile of the laser beam about the mobile surveying system. The mobile surveying system further comprises a detector and a processor. The detector is configured to detect light having traveled a beam path extending from the laser source, via the first deflection unit and the second deflection unit, to an object of an environment surrounding the mobile surveying system and then back from the object, via the second deflection unit and the first deflection unit, to the detector. The processor is configured to collect, along the bidimensional scanning profile, a plurality of scanned points of the environment surrounding the mobile surveying system based on light detected by the detector and reconstruct a trajectory of the mobile surveying system in the environment based on the plurality of scanned points.

The mobile surveying system may also be referred to as a mobile mapping system. In the following, the mobile surveying system may simply be referred to as the surveying system or the surveying instrument. The mobile surveying system may be configured to be arranged on a vehicle or to be carried by a user, e.g., on a movable pole or as a backpack.

In the surveying system, the second deflection unit scans or sweeps the laser beam about the surveying system. For example, the second deflection unit may scan or sweep the laser beam 360° around the surveying system. The laser beam reflects off of objects in the environment surrounding the mobile surveying system and back to a detector of the surveying system, where the processor collects scanned points of the environment based on the reflected light (i.e., collects information about a distance and a direction to every scanned point with respect to a position of the surveying system).

In the present surveying system, the optical path of the laser beam (or scanning beam) includes an intermediate (first) deflection unit before the laser beam reaches the second deflection unit. The first deflection unit is configured to vary the position at which the laser beam impinges the second deflection unit. By varying the position at which the laser beam impinges the second deflection unit, the deflection angle and/or direction of the optical path of the laser beam may vary. The scanning profile is therefore not a straight line, but instead has a two-dimensional/bi-dimensional shape. The bi-dimensional scanning profile may for example have a horizontal extension and a vertical extension. For example, the bi-dimensional scanning profile may have a horizontal extension up to 360°, and a vertical extension of up to 30°, such as about 20°. The bi-dimensional scanning profile may improve redundancy of measurement, covering at the same time a wide area and a large amount of close but non-overlapping points. With the present surveying system, a larger area of the environment may be scanned using a single laser beam.

The movement of the first deflection unit and the second deflection unit may for example provide a scanning profile having a sine shape with a vertical field of view of around 20° and a horizontal field of view of up to 360°.

The processor collects a plurality of scanned points along the bi-dimensional scanning profile and reconstructs the trajectory of the surveying system in the environment, based on the scanned points. By scanning points along a two-dimensional scanning profile, the scanning points may provide more information regarding the surroundings/environment. By having more information about the environment, the trajectory may be more accurately reconstructed. The processor may further be configured to generate a map of the environment surrounding the mobile surveying system based on the plurality of scanned points. The map may for example be a 3-dimensional map. The processor may reconstruct the trajectory of the mobile surveying system in the environment in the generated map. The processor may be configured to simultaneously generate the map and the reconstructed trajectory in the map, based on the plurality of scanned points.

The present surveying system may employ a laser allowing long range distance measurements, for example up to more than 120 m. The laser provides a collimated light beam, thereby resulting in a high (or at least improved) spatial resolution. The laser may further have a small spot size, which allows for a higher spatial resolution. For example, the laser may have a spot size in the range of 6-10 mm at 10 meters, such as 8 mm at 10 meters. The full divergence angle of the laser may for example be in the range of 0.6-1 milliradians (mrad), such as 0.8 mrad. The laser/processor may further authorize a high scanning speed. For example, the laser may employ a pulse repetition rate of 1 million points per second (Mpts/s). The laser source may for example form part of an electronic distance meter (EDM), which may also include the detector and the processor. Further, the EDM may have an accuracy in the millimeter range.

A high spatial resolution and high distance accuracy, e.g., in the range of 1 mm, may provide a good foundation for generating scanned data points for reconstruction of the trajectory.

Further, the bi-dimensional scanning profile may provide that the trajectory can be reconstructed without the need for an (expensive) high-end inertial measurement unit (IMU).

According to some embodiments, the mobile surveying system may further comprise a first orientation sensitive device configured to provide a first output indicative of an orientation of the first deflection unit. The mobile surveying system may further comprise a second orientation sensitive device configured to provide a second output indicative of an orientation of the second deflection unit. The processor may further be configured to, for each scanned point, determine a first orientation of the first deflection unit for the scanned point based on the output of the first orientation sensitive device. For each scanning point, the processor may further be configured to determine a second orientation of the second deflection unit for the scanned point based on the output of the second orientation sensitive device. The processor may further be configured to, for each scanned point, determine a length of the beam path travelled by the detected light. The processor may further be configured to, for each scanned point, determine a position of the scanned point, relative to the mobile surveying system, based on the determined length of the beam path, the determined first orientation, and the determined second orientation.

Based on knowing the orientation of the first and the second deflection units, the processor may accurately determine a direction toward the scanned point relative to the surveying system. By knowing the length of the optical path travelled by the light, the processor may accurately determine a distance to the scanned point from the surveying system. With a distance and a direction towards the scanned point, the processor may accurately position the scanned point relative to the surveying system.

The first and/or second orientation sensitive device may have a high angular resolution, such as up to 288 000 steps per turn, or even higher. A numerical interpolation may be used to artificially increase the number of steps per turn even further. For example, the first and/or second orientation sensitive device may comprise an encoder.

According to some embodiments, the first deflection unit may be rotatable about a first axis. The second deflection unit may be rotatable about a second axis.

For example, the first deflection unit may be rotatable about the first axis to vary the position at which the laser beam impinges the second deflection unit. The first deflection unit may be rotatable 360° around the first axis. Alternatively, the first deflection unit may be rotatable or pivotable back and forth around the first axis.

The second deflection unit may be rotatable 360° about the second axis, to sweep/scan the laser beam 360° around the surveying system.

Depending on the implementation, the first and second axis may for example be different, parallel, or colinear.

According to some embodiments, the mobile surveying system may further comprise a controller. The controller may be configured to control a first rotation of the first deflection unit to vary a position at which the first laser beam impinges the second deflection unit. The controller may further be configured to control a second rotation of the second deflection unit to sweep the laser beam about the mobile surveying system.

For example, the controller may control the first rotation such that the first deflection unit rotates 360° around a first axis. Alternatively, the controller may control the first rotation such that the first deflection unit rotates or pivots back and forth around a first axis.

The controller may control the second rotation such that the second deflection unit rotates 360° around a second axis, to sweep/scan the laser beam about the surveying system.

According to some embodiments, the controller may be configured to control the first deflection unit to rotate at a first frequency. The controller may further be configured to control the second deflection unit to rotate at a second frequency.

According to some embodiments, the first frequency and the second frequency may be non-commensurable. In other words, the first and second frequencies may be non-divisible without remainder by the same quantity or unit.

In such embodiments, the scanning profile may change between each scanning lap or round about the surveying instrument, such that each round or lap provides new scanned points, different from earlier scanned points, even if the surveying instrument is standing still. In such embodiments, the density of scanned points (scan pattern) may increase if the surveying instrument is operating in a fixed position.

According to some embodiments, the first frequency may be at least three times higher than the second frequency. Alternatively, according to some embodiments, the second frequency may be at least three times higher than the first frequency.

In such embodiments, one of the deflection units (i.e., the first or the second deflection unit) may rotate at a high or higher frequency, and the other deflection unit (i.e., the second or the first deflection unit) may rotate at a low or lower frequency.

The combination of a fast deflection unit, rotating at a high or higher frequency, and a slow deflection unit, rotating at a low or lower frequency, may provide a (more) equivalent density of points along both axes of the bi-dimensional scanning profile. For example, one full turn of the fast deflection unit may correspond to a smaller change or step of the slow deflection unit.

The rotation frequency may define the frequency at which the deflection unit rotates one turn about its axis. The rotation frequency may define the frequency at which a pivoting deflection unit performs a full pivoting motion back and forth.

For example, the low or lower frequency may be in the range 10-20 Hz. The high or higher frequency may be in the range 100-200 Hz.

According to some embodiments, the first deflection unit may comprise a prism wedge arranged to deflect the laser beam onto the second deflection unit. The prism wedge may be rotatable about a first axis. The prism wedge may be arranged to deflect the laser beam at an angle of 5-30° from the first axis.

The (optical) prism wedge may include an incident surface arranged to receive the laser beam.

The prism wedge may further have an exit surface, arranged to deflect the laser beam at a certain angle from the optical axis of the incident laser beam. An angle between the incident surface and the exit surface may be referred to as a prism wedge angle. The prism-induced deflection angle may be in a range of +/- 5-30°, more specifically the angle may be in a range of +/- 8-20°, such as about +/-10°. The prism-induced deflection angle may be adjusted by changing the prism wedge angle.

The prism may be arranged such that the incident surface receives the laser beam along an optical axis at a 90° angle from the incident surface. Alternatively, the prism may be arranged at (or close to) the minimum deviation position of the prism, such that the prism-induced deflection angle is (close to) the minimum angle of deviation of the prism.

The first (rotation) axis may be colinear with the optical axis of the incident laser beam. Thus, the rotation of the first deflection unit about the first axis may cause the deflected laser beam to trace a circle in a plane perpendicular to the optical axis of the incident laser beam.

According to some embodiments, the first deflection unit may comprise a first mirror arranged to deflect the laser beam onto the second deflection unit. The first deflection unit may further comprise a shaft aligned with and rotatable about a first axis. The mirror may be mounted on the shaft such that the first axis intersects the mirror surface at a 75-87,5° angle.

As the shaft rotates about the first axis, the angle between the first mirror and the incident laser beam may vary, such that the deflection angle of the laser also varies. The rotation of the shaft, and the first mirror, may thus result in a variation in the position at which the laser beam impinges the second deflection unit.

The first deflection unit may be arranged such that the optical axis of the laser beam incident to the first deflection unit is at a 45° angle relative to the first (rotation) axis. Thus, the rotation of the first deflection unit about the first axis may cause the deflected laser beam to trace a circle in a plane perpendicular to the optical axis of the incident laser beam.

According to some embodiments, the first deflection unit may comprise a first mirror arranged to deflect the laser beam onto the second deflection unit. The first deflection unit may further comprise a galvanometer arranged to rotate the mirror about a first axis. The first axis may be parallel with the first mirror.

The galvanometer may be configured to rotate/pivot the first mirror back and forth about the first axis, to vary the deflection angle of the laser beam reflecting off of the first mirror. As the deflection angle varies, the position at which the laser beam impinges the second deflection unit may also vary.

For example, the galvanometer may rotate/pivot the first mirror back and forth about the first axis in a range of 5-20°.

According to some embodiments, the first deflection unit may comprise a rotatable body comprising a plurality of facets. The first deflection unit may further comprise a shaft aligned with and rotatable about a first axis. The body may be mounted on the shaft such that the first axis is perpendicular to a normal direction of each of the facets forming first surfaces, and at any rotational position of the body, one of the plurality of facets is arranged to deflect the laser beam onto the second deflection unit.

As the shaft and the rotatable body rotate, the angle between the incident laser beam and the facet it impinges may vary. As a result, the deflection angle may change, and thus the position at which the laser beam impinges the second deflection unit may also vary. Further, as the rotation of the rotatable body continues, a first facet may rotate away from the laser beam. The laser beam may then impinge a second facet, adjacent to the first facet. Due to an angle between adjacent facets, the angle between the incident laser beam and the facet it impinges may change abruptly at a corner between adjacent facets. This may result in the deflected laser beam repeatedly sweeping or scanning across the second deflection unit.

The rotatable body may be rotatable 360° about the first axis. Each of the facets of the rotatable body may be reflective. The rotatable body may have a polygonal cross-section or base. The rotatable body may for example have the shape of a geometric right prism, i.e., a prism shape with rectangular joining faces, wherein the joining edges and faces are perpendicular to the base faces. In such embodiments, the joining faces may form the facets.

According to some embodiments, the second deflection unit may comprise a second mirror arranged to deflect the laser beam. The second deflection unit may further comprise a shaft aligned with and rotatable about a second axis. The second mirror may be mounted on the shaft to scan the laser beam about the mobile surveying system upon rotation of the shaft.

The second mirror may be arranged on the shaft such that the second axis intersects the second mirror at a 45° angle. The second deflection unit may be arranged such that the second axis is aligned with a vertical axis of the surveying system. Rotation of the shaft, and thus the second mirror, may thus result in the laser beam scanning or sweeping around the surveying system.

According to some embodiments, the second deflection unit may comprise a second prism arranged to deflect the laser beam. The second prism may be rotatable about a second axis to scan the laser beam about the mobile surveying system.

The second prism may have an incident surface arranged to receive the laser beam from the first deflection unit. The second prism may further comprise a reflection surface configured to provide internal reflection of the laser beam toward an exit surface configured to couple out the laser beam.

The second prism may be arranged such that the second axis intersects the internal reflection surface at a 45° angle. The second axis may be aligned with a vertical axis of the surveying system.

The second prism may have a cross-section in the shape of a right triangle, with the reflection surface corresponding to the hypothenuse.

According to some embodiments, the processor may be configured to generate a point cloud from the plurality of scanned points.

The point cloud may form a 3D representation of the environment. The trajectory may be reconstructed based on and relative to the point cloud.

According to some embodiments, the processor may be configured to perform a Simultaneous Localization and Mapping, SLAM, algorithm using the plurality of scanned points. The processor may further be configured to reconstruct the trajectory of the mobile surveying system in the environment based on the SLAM algorithm.

With a SLAM algorithm, the processor may generate, simultaneously, a (3D) map of the environment surrounding the mobile surveying instrument, and a trajectory of the mobile surveying instrument in the map.

According to a second aspect of the present disclosure, a method for reconstructing a trajectory of a mobile surveying system is provided. The mobile surveying system includes a laser source, a first deflection unit, and a second deflection unit. The first deflection unit is arranged to deflect the laser beam onto the second deflection unit. The method comprises operating the laser source to generate a laser beam. The method further comprises controlling a first rotation of the first deflection unit to vary a position at which the laser beam impinges the second deflection unit and controlling a second rotation of the second deflection unit to scan the laser beam about the mobile surveying system, to generate a bi-dimensional scanning profile of the laser beam about the mobile surveying system. The method further comprises detecting light having traveled along a beam path extending from the laser source, via the first deflection unit and the second deflection unit, to an object of an environment surrounding the mobile surveying system and then back from the object, the second deflection unit and the first deflection unit, to the detector. The method further comprises collecting a plurality of scanned points of the environment surrounding the mobile surveying system, along the bidimensional scanning profile, based on the detected light, and reconstructing a trajectory of the mobile surveying system in the environment based on the plurality of scanned points.

Any embodiment described herein may be combinable with other embodiments also described herein, and the present disclosure relates to all combinations of features.

### Brief description of drawings

Exemplifying embodiments will now be described in more detail, with reference to the following appended drawings:
Figure 1 is a schematic illustration of a surveying system in an environment, in accordance with some embodiments;
Figure 2 is a schematic illustration of a surveying system, in accordance with some embodiments;
Figures 3a and 3b illustrate a first deflection unit and a second deflection unit, in accordance with some embodiments;
Figure 4 illustrates a first deflection unit and a second deflection unit, in accordance with some embodiments;
Figure 5 illustrates a first deflection unit and a second deflection unit, in accordance with some embodiments;
Figure 6 illustrates a first deflection unit and a second deflection unit, in accordance with some embodiments;
Figure 7 illustrates a first deflection unit and a second deflection unit, in accordance with some embodiments;
Figure 8 illustrates a bi-dimensional scanning profile, in accordance with some embodiments;
Figure 9 illustrates a bi-dimensional scanning profile, in accordance with some embodiments; and
Figure 10 is a flowchart illustrating a method for reconstructing a trajectory of a mobile surveying system, in accordance with some embodiments.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

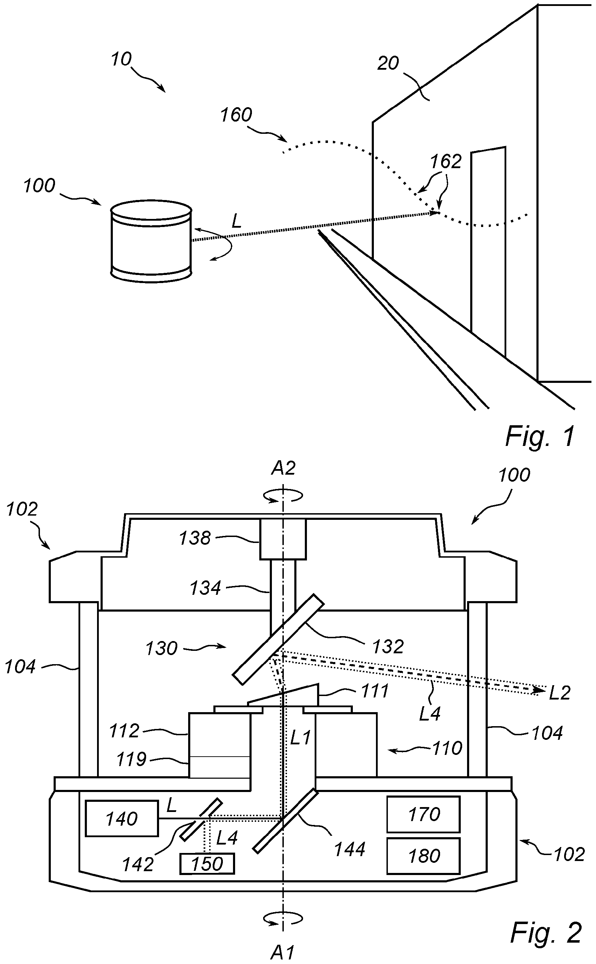

With reference to Figure 1, operations of a surveying system 100 in an environment 10, in accordance with some embodiments, will be described.

The surveying system 100 may travel through the environment 10. For example, the surveying system 100 may be mounted on a vehicle, or carried by a user, none of which are depicted in Figure 1.

The surveying system 100 emits a laser beam L. The laser beam L reflects off of an object 20 in the environment. In the present Figure, the object 20 is a building. At least some of the reflected light is reflected back in a direction toward the surveying system 100, where it may be detected by a detector, e.g., detector 150 in Figure 2. Based on the detected light, the surveying system 100 may determine a distance between the object 20 and the surveying system 100.

The surveying system 100 sweeps the laser beam L around itself, i.e., around the surveying system 100. Specifically, the surveying system sweeps the laser beam L with a bi-dimensional scanning profile 160. The surveying system 100 measures, or scans, a plurality of scanned points 162 along the bi-dimensional scanning profile 160. For each scanned point 162, the surveying system 100 may determine a distance from the surveying system 100 to the scanned point. Based on knowing a direction in which the laser beam L is emitted for each scanned point 162, the surveying system 100 may determine a position of each scanned point, relative to the other scanned points 162 and/or relative to the surveying system 100 itself.

As the surveying system 100 travels through the environment 10, its position relative to previously scanned points changes. By continuously, or repeatedly, scanning the environment, the surveying system 100 may collect data regarding increasingly more points 162. For example, the surveying system 100 may compile or generate a point cloud of scanned points 162.

Based on the scanned points 162, or the positions of the scanned points 162, the surveying system 100 may reconstruct a trajectory of the surveying system 100 in the environment.

The plurality of scanned points may form a three-dimensional (3D) map of the environment 10. The surveying system 100 may generate, from the plurality of points, a map, such as a 3D map, of the environment 10. For example, the surveying system 100 may use a simultaneous localization and mapping algorithm, a SLAM algorithm, to generate a map of the environment 10 and reconstruct a trajectory of the surveying system 100 inside the map of the environment.

With reference to Figure 2, a surveying system 100, in accordance with some embodiments, will be described.

The surveying system 100 may be equivalent to the surveying system 100 described above with reference to Figure 1.

The surveying system 100 comprises a laser source 140, a first deflection unit 110 and a second deflection unit 130, arranged inside a housing 102.

The laser source 140 is configured and arranged to emit a laser beam L. In the present embodiment, an optical path of the laser beam L comprises an optional first reflective element 144, e.g., a mirror, arranged to deflect the laser beam L1 onto the first deflection unit 110.

The first deflection unit 110 is arranged to deflect the laser beam L1 onto the second deflection unit 130. The first deflection unit 110 is rotatable about a first rotation axis A1, to vary a position at which the laser beam impinges the second deflection unit 130. The second deflection unit 130 is rotatable about a second rotation axis A2 to scan the laser beam L2 about the mobile surveying system 100. The second axis A2 may be aligned with a vertical axis of the surveying system 100. The housing 102 comprises at least one window 104 extending around the surveying instrument 100 allowing the laser beam L2 to be emitted outside the housing 102.

As previously mentioned with reference to Figure 1, the laser beam L2 emitted by the surveying system 100, may hit an object 20 in the environment 20 of the surveying instrument 100. At least some of the light of the laser beam L2 may be reflected back toward the surveying instrument 100, as a broader beam of received light L4. The received light L4 may travel the optical path of the laser beam L in the opposite direction. The light L4 may enter through the window 104, deflect off of the second deflection unit 130, to the first deflection unit 110, and (in Figure 1) via the first reflective surface 144 to a beam splitter 142. The beam splitter 142 is arranged to transmit the laser beam L in a first direction, i.e., from left to right in Figure 1, and to direct light L4 from an opposite direction (i.e., from the right in Figure 1) onto a detector 150. For example, as in Figure 1, the beam splitter 142 may be a glass plate. On at least one side, the glass plate may have a reflective coating. The reflective coating may have an aperture, allowing the laser L to be transmitted through the glass plate onto the first reflective element 144. Alternatively, the beam splitter 142 (or glass plate) may have a physical aperture allowing the laser L to be transmitted through the glass plate onto the first reflective element 144. In the opposite direction, the broader beam of the received light L4 may provide that most of the received light L4 is directed towards the detector 150.

While not illustrated in the other figures, it will be appreciated that a detector 150 may be similarly implemented in the embodiments described throughout this disclosure. Specifically, a beam splitter 142 and a detector 150 may be implemented between the first deflection unit 110 and the laser source 140.

The surveying system 100 further comprises a processor 170 in communicative contact with the detector 150 to collect scanned points 162 based on light detected by the detector 150. The processor 170 is configured to collect a plurality of scanned points 162 of the environment 10 along the bidimensional scanning profile 160. The processor 170 is further configured to reconstruct a trajectory of the mobile surveying system 100 in the environment 10 based on the plurality of scanned points 162.

The processor 170 is further in contact with a controller 180 of the surveying system 100. The controller 180 is configured to control a rotation of the first deflection unit 110 and the second deflection unit 130. The controller 180 may further control the laser source 140 and the detector 150.

The processor 170 and the controller 180 are not illustrated in the other figures, it will be appreciated, however, that the processor 170 and the controller 180 may also be implemented together with embodiments illustrated in the other figures described herein.

In Figure 1, the first deflection unit 110 comprises a prism 111 arranged on a holding structure 112. The holding structure 112 is configured to rotate the prism 111 about the first axis A1. The surveying system 100 comprises a first orientation sensitive device 119, connected to the holding structure 112. The orientation sensitive device 119 is configured to provide a first output indicative of an orientation of the first deflection unit 110. The second deflection unit 130 comprises a (second) mirror 132 arranged to deflect the laser beam. The mirror 132 is mounted on a shaft 134, which is aligned with and rotatable about the second axis A2. The surveying system 100 further comprises a second orientation sensitive device 138, connected to the shaft 134. The orientation sensitive device 138 is configured to provide a second output indicative of an orientation of the second deflection unit 130. The first and second orientation sensitive devices may be in communication with the processor 170.

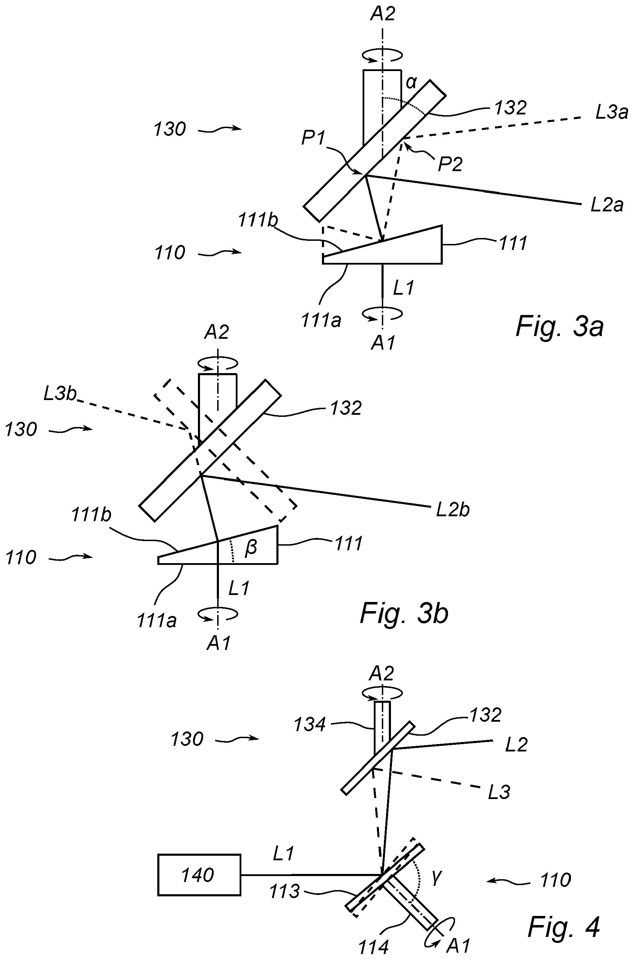

With further reference to Figures 3a and 3b, more details regarding the first and second deflection units 110, 130 illustrated in Figure 2 will be provided.

In Figures 2, 3a, and 3b, the first deflection unit 110 comprises an optical prism wedge 111. The prism wedge 111 has a first surface, or an incident surface 111a. The incident surface 111a is arranged perpendicularly to the incident laser beam L1, i.e., perpendicularly to an optical axis of the incident laser beam L1. Thus, the incident laser beam L1 may pass through the incident surface 111a along a same optical axis. The incident surface 111a forms an angle β with a second surface, an exit surface 111b, of the prism wedge 111. The angle β may be referred to as a prism wedge angle β. The prism wedge angle β may be selected to deflect the light beam L upon exiting the prism 111 through the exit surface b. The prism-induced deflection angle may be in a range of 5-30° from the optical axis of the incident laser beam L1.

The second deflection unit 130 comprises a (second) mirror 132 mounted at an angle α on a shaft 134, such that the second axis A2 intersects the mirror surface 132 at the angle α. The angle α may be 45 degrees.

As previously mentioned, the prism 111 is rotatable around a first rotation axis A1. Figure 3a illustrates a rotation of the first deflection unit 110 around the first rotation axis A1. For illustrative purposes, in Figure 3a, the second deflection unit 130 is maintained in a fixed position. In a first position, the prism 111, illustrated with solid lines, deflects the laser beam L2a such that it hits the mirror surface 132 of the second deflection unit 130 in a first position P1. The laser beam L2a is reflected off of the mirror surface 132, at the first position P1, in a first direction. In a second position, illustrated with dashed lines, the prism 111 has rotated 180° around the first axis A1. As a result, the laser beam L3a is deflected at the same prism-induced deflection angle relative to the prism, but with a 180° rotation relative to the housing, such that it hits the second mirror surface 132 of the second deflection unit 130 in a second position P2 and is reflected in a different direction from the laser beam L2a in the first position. Specifically, as the prism wedge 111 rotates, the laser beam L2a, L3a, may trace a circle, which varies a position at which the laser beam impinges the second deflection unit 130.

Figure 3b illustrates a rotation of the second deflection unit 130 around the second rotation axis A2. For illustrative purposes, in Figure 3b, the first deflection unit 110 is maintained in a fixed position. The second deflection unit 130 is rotatable about the second axis A2 to scan the laser beam L2b, L3b about the surveying system 100. In a first position, illustrated with solid lines, the mirror surface 132 of the second deflection unit 130 deflects the laser beam L2b in a first direction. In a second position, illustrated with dashed lines, the second deflection unit has rotated 180° about the second axis A2. Thus, in the second position, the second deflection unit 130 deflects the laser beam L3b in a second direction.

The second axis A2 may be aligned with a vertical axis of the surveying system 100. The vertical axis may be an axis that is vertically arranged during normal use of the surveying system. The rotation of the second deflection unit 130 about the second axis A2 may provide that the laser beam L2b, L3b is scanned about the surveying system 100 in a range around a horizontal plane.

Together, the rotation of the first deflection unit 110, about the first axis A1, and the rotation of the second deflection unit 130, about the second axis A2, provide a bi-dimensional scanning profile, such as the bi-dimensional scanning profile 160 illustrated in Figure 1. The bi-dimensional scanning profile may for example have a horizontal extension and a vertical extension.

In the present embodiment, the first axis A1 and the second axis A2 are collinear. Thus, in order for the rotation of the first deflection unit 110 to vary the position at which the laser beam impinges the second deflection unit 130, the first deflection unit 110 may not rotate at the exact same rotational speed (or frequency) and direction as the second deflection unit 130.

Depending on the embodiment, the first axis A1 may alternatively be non-parallel, or perpendicular to the second axis A2.

In the embodiment illustrated in Figures 2, 3a, and 3b the first deflection unit 110 may rotate at a low speed, such as for example 10-20 Hz. This may provide a relatively slow change of the position at which the laser beam impinges the second deflection unit 130. The second deflection unit 130, on the other hand, may rotate at a high speed, such as 100-200 Hz. As a result, the laser beam may be scanned about the surveying system 100 at a high frequency/speed. This combination may provide a bi-dimensional scanning pattern which varies more quickly in the horizontal direction, and more slowly in the vertical direction.

With reference to Figure 4, a first deflection unit 110 in accordance with some embodiments will be described. In Figure 4, the laser source 140 and the second deflection unit 130 may be equivalent to the laser source 140 and the second deflection unit 130 described above with reference to the preceding figures.

The laser source 140 is configured and arranged to direct a laser beam L1 onto a first deflection unit 110. The first deflection unit 110 comprises a first mirror 113 mounted on a shaft 114. The shaft 114 is rotatable about a first axis A1. In the present embodiment, the first axis A1 is not collinear with the second axis A2 of the second deflection unit 130. Instead, in Figure 4, the first axis A1 is arranged at a 45° angle from an optical axis of the incident laser beam L1.

The first mirror 113 is mounted on the shaft 114 at an angle γ. Specifically, the first mirror 113 is mounted on the shaft 114 such that the first axis A1 intersects the first mirror surface 113 at the angle γ. The angle γ may be in the range of 75-87,5°.

As the first mirror 113 is rotated about the first axis A1, the deflection angle of the laser beam deflected by the first mirror 113 changes, which varies a position at which the laser beam impinges the second deflection unit 130. In a first position, illustrated with solid lines, the first mirror 113 is rotated to provide a larger angle of incidence of the laser beam L1. Thus, in the first position, the laser beam L2 is deflected at a larger deflection angle. In a second position, illustrated with dashed lines, the first mirror 113 has rotated 180° about the first axis A1, such that the position at which the laser beam L3 impinges the second deflection unit 130 has changed. In the second position, the first mirror 113 provides a smaller angle of incidence of the laser beam L1, and thus the laser beam L3 is reflected at a smaller, narrower, deflection angle.

Similarly to the embodiment illustrated in Figures 2, 3a, and 3b, the first deflection unit 110 may be a slow deflection unit, and the second deflection unit 130 may be a fast deflection unit. In other words, the second mirror 113 may rotate at a low speed/frequency, e.g., 10-20 Hz, and the second mirror 132 may rotate at a high speed/frequency, such as 100-200 Hz.

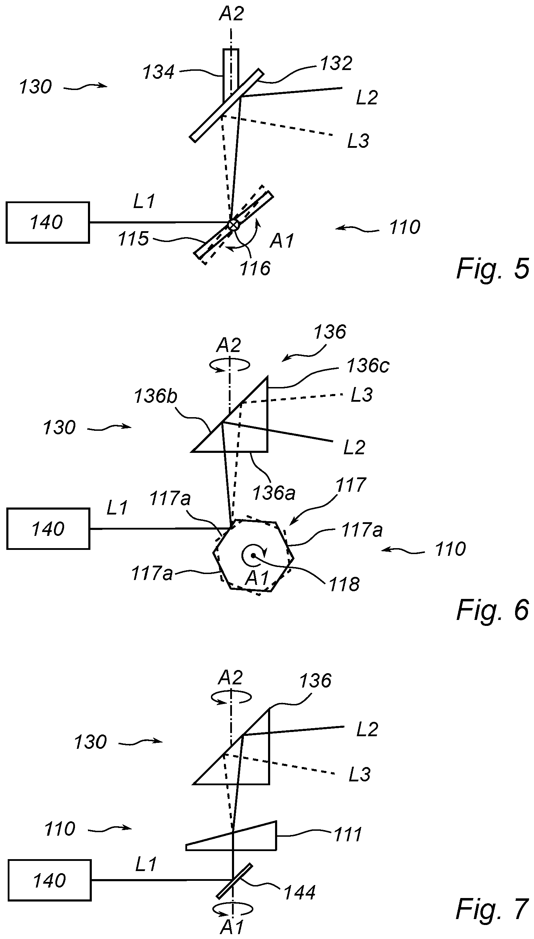

With reference to Figure 5, a first deflection unit 110 in accordance with some embodiments will be described. In Figure 5, the laser source 140 and the second deflection unit 130 may be equivalent to the laser source 140 and the second deflection unit 130 described above with reference to the preceding figures.

As in Figure 4, the laser source 140 is configured and arranged to direct a laser beam L1 onto a first deflection unit 110. The first deflection unit 110 comprises a first mirror 115 rotatable about a first axis A1. In the present embodiment, the first axis A1 is parallel with the first mirror 115 (i.e., parallel with the plane defined by the mirror 115). In Figure 5, the first axis A1 is perpendicular to an optical axis of the incident laser beam L1.

The first deflection unit 110 further comprises a galvanometer 116 configured to rotate/pivot the first mirror 115 back and forth about the first axis A1. As the first mirror 115 is rotated/pivoted back and forth about the first axis A1, the deflection angle of the laser beam deflected by the first mirror 115 changes, which varies a position at which the laser beam impinges the second deflection unit 130.

In a first position, illustrated with solid lines, the first mirror 115 is tilted to provide a larger angle of incidence of the laser beam L1. Thus, in the first position, the laser beam L2 is deflected at a larger deflection angle. In a second position, illustrated with dashed lines, the first mirror 115 has tilted about the first axis A1, such that the position at which the laser beam L3 impinges the second deflection unit 130 has changed. In the second position, the first mirror 115 provides a smaller angle of incidence of the laser beam L1, and thus the laser beam L3 is reflected at a smaller, narrower, deflection angle. The rotation or pivoting of the first mirror 115 may provide that the laser beam is traced back and forth across the second deflection unit 130.

Similarly to the embodiments described above and illustrated in Figures 2, 3a, and 3b, the first deflection unit 110 may be a slow deflection unit, and the second deflection unit 130 may be a fast deflection unit. In other words, the first mirror 115 may rotate/pivot at a low speed/frequency, e.g., 10-20 Hz, and the second mirror 132 may rotate at a high speed/frequency, such as 100-200 Hz.

With reference to Figure 6, a first deflection unit 110 and a second deflection unit 130, in accordance with some embodiments, will be described.

In Figure 6, the laser source 140 may be equivalent to the laser source 140 described above with reference to the preceding figures.

The first deflection unit 110 of Figure 6 comprises a rotatable body 117 comprising a plurality of facets 117a. The rotatable body 117 may also be referred to as a scanning polygon.

The rotatable body is mounted on a shaft 118, which is aligned with and rotatable about a first axis A1. The rotatable body 117 is rotatable 360 degrees about the first axis A1. As the rotatable body 117 rotates about the axis A1, at any rotational position of the rotatable body, a facet 117a of the rotatable body 117, or scanning polygon, is in the optical path of the laser beam L1. As the body 117 rotates, the deflection angle of the facet 117a changes, such that the laser beam L2, L3 sweeps across the second deflection unit 130. In a first position, illustrated with solid lines, facet 117a is angled to provide a smaller angle of incidence of the laser beam L1. Thus, in the first position, the laser beam L2 is deflected at a smaller/narrower deflection angle. In a second position, illustrated with dashed lines, the rotatable body 117 has rotated about the first axis A1, such that the position at which the laser beam L3 impinges the second deflection unit 130 has changed. In the second position, the facet 117a provides a larger angle of incidence of the laser beam L1, and thus the laser beam L3 is reflected at a larger deflection angle. As the body 117 continues to rotate, a next facet 117a is brought into the optical path of the laser beam L1. At the transition where a first facet 117a rotates out of the optical path of the laser beam L1 and a subsequent, neighboring facet 117a, rotates to be in the optical path of the laser beam L1, the deflection angle changes quickly from wide to narrow, and a new sweep of the beam L2, L3 across the second deflection unit begins. It is appreciated that the rotational body 117 may instead rotate in the opposite direction, such that the deflection angle changes from narrow to wide at the transition between neighboring facets 117a.

In Figure 6, the second deflection unit 130 differs from the second deflection unit 130 described above with reference to the preceding figures. In the embodiment illustrated in Figure 6, the second deflection unit comprises a second prism 136 rotatable about a second axis A2 to sweep/scan the laser beam L2, L3 about the surveying system 100.

The second prism 136 has an incident surface 136a, a reflection surface 136b, and an exit surface 136c. In the present embodiment, the incident surface 136a, the reflection surface 136b, and the exit surface 136c form a right triangle, wherein the reflection surface corresponds to the hypothenuse.

The incident surface 136a is arranged to receive the laser beam from the first deflection unit 110. The reflection surface 136b is arranged to provide internal reflection of the laser beam L2, L3 toward the exit surface 136c, which is configured to couple out the laser beam L2, L3.

In Figure 6, the second prism is arranged such that the second axis A2 intersects the internal reflection surface 136b at a 45° angle.

The rotation of the prism 136 is not illustrated in Figure 6. It will however be appreciated that the rotation of the prism 136 may provide a similar scanning motion as the rotation of the second mirror 132 described above with reference to Figure 3b.

In the embodiment illustrated in Figure 6, the first deflection unit 110 may be a fast deflection unit, and the second deflection unit 130 may be a slow deflection unit. In other words, the rotatable body 117, or scanning polygon 117, may rotate at a high speed or frequency, such as 100-200 Hz, while the second prism 136 may rotate at a lower speed or frequency, such as 10-20 Hz.

It is appreciated that the different described embodiments of the first deflection unit 110 are combinable with the different described embodiments of the second deflection unit 130. For example, as is illustrated in Figure 7, a first deflection unit 110 comprising a prism wedge, as described above with reference to Figures 2, 3a and 3b, may be combined with a second deflection unit 130 comprising a second prism 136, as described above with reference to Figure 6.

Different combinations of first and second deflection units 110, 130 may provide different scanning profiles 160.

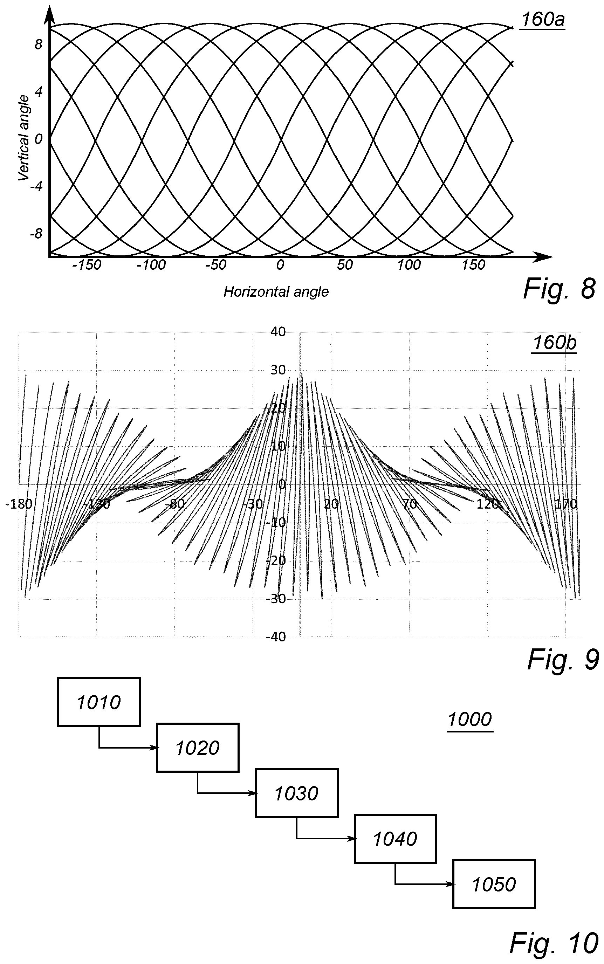

A first scanning profile 160a is illustrated in Figure 8. The bi-dimensional scanning profile 160a has a horizontal extension, or field of view, of 360°. The surveying system 100 generating such a scanning profile 160a thus sweeps or scans, the laser beam 360° about the surveying system. The bi-dimensional scanning profile 160a has a vertical extension, or field of view, of ±10°. The laser beam is thus scanned up and down in a 20-degree range.

The scanning profile 160a may provide coverage of a wide area, at the same time as providing a large number of close, but non-overlapping points, which may provide redundancy in the measurements.

The scanning profile of a single turn around the surveying system 100 is not a straight line. Instead, each sweep/scan has a sinusoidal shape, resembling a Lissajous curve. Such a shape may be provided by a first deflection unit 110 which rotation deflects the laser beam in a circular shape, including for example a rotating prism wedge 111, as described in Figures 2, 3a, and 3b, or a rotating mirror 114, as described in Figure 4. Alternatively, the shape may be provided by a first deflection unit 110 which scans the laser beam back and forth, such as the galvanometer mirror 115 of Figure 5, to trace a sine shape.

This scanning profile 160a may be provided by a surveying system 100 including a slow first deflection unit 110, and a faster second deflection unit 130. Such a surveying system 100 may sweep fast in the horizontal direction, and slower in the vertical direction.

As the laser beam L2, L3 is swept several turns about the surveying system 100, scanned points are collected/registered. As is illustrated, the curves, i.e., the scanning profiles of individual turns, do not coincide. If the rotational speeds/frequencies of the first and second deflection units 110, 130 are non-commensurable, i.e., not divisible by the same denominator, the scanning profile of one turn will not be repeated in a later turn. Thus, if the surveying system 100 is stationary, the number of (individual) scanned points of the environment 10 as viewed from the stationary position may increase, which may provide data redundancy for map generation and/or trajectory reconstruction.

A second scanning profile 160b is illustrated in Figure 9.

The second scanning profile 160b also has a horizontal extension, or field of view, of 360°. However, in Figure 9, the vertical field of view is about ±30°.

The scanning profile 160b provides a higher density of data points in a vertical range close to the centerline at 0°, than the scanning profile 160a of Figure 8. It also provides a larger vertical range than the first scanning profile 160a, but with less density in some sections at the vertical edges of the scanning profile 160b.

The scanning profile or pattern 160b may be provided by a surveying system 100 including a fast first deflection unit 110, and a slower second deflection unit 130. The first deflection unit 110 may scan the laser beam across the second deflection unit 130, resulting in a fast movement back and forth in the vertical direction, and providing the zig-zag shape of the scan pattern. The slower rotation of the second deflection unit 130 sweeps the laser beam in the horizontal direction.

For example, the scanning pattern (or profile) 160b may be provided by a surveying system including a galvanometer rotated/pivoted mirror 115 as described above with reference to Figure 5, or a scanning polygon 117 as described with reference to Figure 6.

The scanning profile 160b has a higher density of points in a vertical direction in the regions ±70-110°. Thus, in road scanning applications, the surveying instrument may for example be arranged to align the horizontal ±90° positions of the bi-dimensional scanning profile 160b with the direction of movement of a vehicle, to provide a larger density of points on and around the road in the front and back of the vehicle than to the sides of the vehicle.

Further, a lower density of points at the vertical ends of the scan may be advantageous when using a SLAM algorithm. Points at the vertical ends of the scan may be of less importance for localizaiton and mapping. Having a lower density of these less important points may improve processing time.

With reference to Figure 10, and to preceding figures, a method 1000 for reconstructing a trajectory of a mobile surveying system 100, in accordance with some embodiments, will be described.

The method 1000 may be, at least partially, implemented in and executed by a processor, such as the processor 170 illustrated in Figure 2.

The mobile surveying system which trajectory is reconstructed may be a mobile surveying system 100 as described above with reference to any of the preceding figures. The mobile surveying system 100 comprises laser source 140, a first deflection unit 110, a second deflection unit 130 and a detector 150.

The method 1000 comprises operating, at step 1010, the laser source 140 to generate a laser beam L.

At step 1020, the method 1000 comprises controlling, using e.g., a controller 180 as illustrated in Figure 2, a first rotation of the first deflection unit 110 to vary a position P1, P2 at which the laser beam impinges the second deflection unit 130. Step 1020 also includes controlling a second rotation of the second deflection unit 130 to scan the laser beam about the mobile surveying system 100. At step 1020, a bi-dimensional scanning profile 160 of the laser beam is generated about the mobile surveying system 100.

At step 1030, the method 1000 further comprises detecting light L4 having traveled along a beam path extending from the laser source 140, via the first deflection unit 110 and the second deflection unit 130, to an object 20 of an environment 10 surrounding the mobile surveying system 100 and then back from the object 10, via the second deflection unit 130 and the first deflection unit 110, to the detector 150.

At step 1040, the method 1000 comprises collecting a plurality of scanned points 162 of the environment 10 surrounding the mobile surveying system 100 based on the detected light. The plurality of scanned points 162 are collected along the bidimensional scanning profile 160.

Step 1040 may for example comprise generating a point cloud from the plurality of scanned points.

The surveying instrument may further comprise a first orientation sensitive device 119, as illustrated in Figure 2, configured to provide a first output indicative of an orientation of the first deflection unit 110, and a second orientation sensitive device 138, as illustrated in Figure 2, configured to provide a second output indicative of an orientation of the second deflection unit 130.

Method 1000 may further comprise an optional step of determining a first orientation of the first deflection unit 110 for the scanned point 162 based on the output of the first orientation sensitive device 119. The method 1000 may further comprise a step of determining a second orientation of the second deflection unit 130 for the scanned point 162 based on the output of the second orientation sensitive device 138. Method 1000 may further comprise a step of determining a length of the beam path travelled by the detected light, and a step of determining a position of the scanned point 162, relative to the mobile surveying system 1000, based on the determined length of the beam path, the determined first orientation, and the determined second orientation.

At step 1050, the method 1000 comprises reconstructing a trajectory of the mobile surveying system 1000 in the environment 10 based on the plurality of scanned points 162.

Step 1050 may for example comprise performing a Simultaneous Localization and Mapping, SLAM, algorithm using the plurality of scanned points 162, and reconstructing the trajectory of the mobile surveying system 100 in the environment 10 based on the SLAM algorithm.

The person skilled in the art realizes that the present invention by no means is limited to the preferred embodiments described above. On the contrary, many modifications and variations are possible within the scope of the appended claims.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A mobile surveying system (100) comprising:
a first deflection unit (110), a second deflection unit (130), and a laser source (140) configured to generate a laser beam (L); wherein:
the first deflection unit is arranged to deflect the laser beam onto the second deflection unit, the first deflection unit being rotatable to vary a position (P1, P2) at which the laser beam impinges the second deflection unit;
the second deflection unit is rotatable to scan the laser beam about the mobile surveying system; and
the first deflection unit and the second deflection unit together provide a bi-dimensional scanning profile (160) of the laser beam about the mobile surveying system;
the mobile surveying system further comprising:
a detector (150) configured to detect light having traveled a beam path extending from the laser source, via the first deflection unit and the second deflection unit, to an object (20) of an environment (10) surrounding the mobile surveying system and then back from the object, via the second deflection unit and the first deflection unit, to the detector; and
a processor (170) configured to:
collect, along the bidimensional scanning profile, a plurality of scanned points (162) of the environment surrounding the mobile surveying system based on light detected by the detector; and
reconstruct a trajectory of the mobile surveying system in the environment based on the plurality of scanned points.

2. The mobile surveying system of claim 1, further comprising:
a first orientation sensitive device (119) configured to provide a first output indicative of an orientation of the first deflection unit; and
a second orientation sensitive device (138) configured to provide a second output indicative of an orientation of the second deflection unit; wherein
the processor is further configured to, for each scanned point:
determine a first orientation of the first deflection unit for the scanned point based on the output of the first orientation sensitive device;
determine a second orientation of the second deflection unit for the scanned point based on the output of the second orientation sensitive device;
determine a length of the beam path travelled by the detected light; and
determine a position of the scanned point, relative to the mobile surveying system, based on the determined length of the beam path, the determined first orientation, and the determined second orientation.

3. The mobile surveying system of any of the preceding claims, wherein the first deflection unit is rotatable about a first axis (A1), and the second deflection unit is rotatable about a second axis (A2).

4. The mobile surveying system of any of the preceding claims, further comprising a controller (180) configured to:
control a first rotation of the first deflection unit to vary a position (P1, P2) at which the first laser beam impinges the second deflection unit, and
control a second rotation of the second deflection unit to sweep the laser beam about the mobile surveying system.

5. The mobile surveying system of claim 4, wherein the controller is configured to control the first deflection unit to rotate at a first frequency, and control the second deflection unit to rotate at a second frequency;
wherein the first frequency and the second frequency are non-commensurable.

6. The mobile surveying system of any of claims 4 or 5, wherein the controller is configured to control the first deflection unit to rotate at a first frequency, and control the second deflection unit to rotate at a second frequency; wherein
the first frequency is at least three times higher than the second frequency, or
the second frequency is at least three times higher than the first frequency.

7. The mobile surveying system of any of the preceding claims, wherein the first deflection unit comprises a prism wedge (111) arranged to deflect the laser beam onto the second deflection unit, wherein:
the prism wedge is rotatable about a first axis; and
the prism wedge is arranged to deflect the laser beam at a 5-30-degree angle from the first axis.

8. The mobile surveying system of any of claims 1-6, wherein the first deflection unit comprises:
a first mirror (113) arranged to deflect the laser beam onto the second deflection unit; and
a shaft (114) aligned with and rotatable about a first axis; wherein
the mirror is mounted on the shaft such that the first axis intersects the mirror surface at a 75-87,5-degree angle.

9. The mobile surveying system of any of claims 1-6, wherein the first deflection unit comprises:
a first mirror (115) arranged to deflect the laser beam onto the second deflection unit; and
a galvanometer (116) arranged to rotate the mirror about a first axis, wherein the first axis is parallel with the first mirror.

10. The mobile surveying system of any of claims 1-6, wherein the first deflection unit comprises:
a rotatable body (117) comprising a plurality of facets (117a); and
a shaft (118) aligned with and rotatable about a first axis;
wherein the body is mounted on the shaft such that:
the first axis is perpendicular to a normal direction of each of the facets forming first surfaces, and
at any rotational position of the body, one of the plurality of facets is arranged to deflect the laser beam onto the second deflection unit.

11. The mobile surveying system of any of the preceding claims, wherein the second deflection unit comprises:
a second mirror (132) arranged to deflect the laser beam; and
a shaft (134) aligned with and rotatable about a second axis; wherein
the second mirror is mounted on the shaft to scan the laser beam about the mobile surveying system upon rotation of the shaft.

12. The mobile surveying system of any of claim 1-10, wherein the second deflection unit comprises:
a second prism (136) arranged to deflect the laser beam, the second prism being rotatable about a second axis to scan the laser beam about the mobile surveying system.

13. The mobile surveying system of any of the preceding claims, wherein the processor is configured to generate a point cloud from the plurality of scanned points.

14. The mobile surveying system of any of the preceding claims, wherein the processor is configured to:
perform a Simultaneous Localization and Mapping, SLAM, algorithm using the plurality of scanned points; and
reconstruct the trajectory of the mobile surveying system in the environment based on the SLAM algorithm.

15. A method (1000) for reconstructing a trajectory of a mobile surveying system including a laser source, a first deflection unit, a second deflection unit and a detector, the first deflection unit being arranged to deflect the laser beam onto the second deflection unit, the method comprising:
operating (1010) the laser source to generate a laser beam;
controlling (1020) a first rotation of the first deflection unit to vary a position at which the laser beam impinges the second deflection unit, and controlling a second rotation of the second deflection unit to scan the laser beam about the mobile surveying system, to generate a bi-dimensional scanning profile of the laser beam about the mobile surveying system;
detecting (1030) light having traveled along a beam path extending from the laser source, via the first deflection unit and the second deflection unit, to an object of an environment surrounding the mobile surveying system and then back from the object, the second deflection unit and the first deflection unit, to the detector;
collecting (1040) a plurality of scanned points of the environment surrounding the mobile surveying system, along the bidimensional scanning profile, based on the detected light; and
reconstructing (1050) a trajectory of the mobile surveying system in the environment based on the plurality of scanned points.
